# EUROPÄISCHE PATENTSCHRIFT

(11) **EP 3 768 548 B1**
(45) Veröffentlichungstag und Bekanntmachung des Hinweises auf die Patenterteilung: **04.05.2022**
(21) Anmeldenummer: 19710396.3
(22) Anmeldetag: 11.03.2019
(51) Int. Cl.: B60N 2/02, B60N 2/16, B60N 2/62, B60N 2/68

(54) **SITZTRÄGERGESTELL EINES KRAFTFAHRZEUGSITZES MIT EINEM SITZRAHMEN UND EINER NEIGUNGSVERSTELLBAREN SITZSCHALE**
SEAT SUPPORT FRAME OF A MOTOR VEHICLE SEAT COMPRISING A SEAT FRAME AND AN INCLINATION-ADJUSTABLE SEAT SHELL
CHÂSSIS DE SUPPORT DE SIÈGE D'UN SIÈGE DE VÉHICULE AUTOMOBILE COMPRENANT UN CADRE DE SIÈGE ET UNE COQUILLE DE SIÈGE DONT L'INCLINAISON PEUT ÊTRE AJUSTÉE

(30) Priorität: 21.03.2018 DE 102018106611
(43) Veröffentlichungstag der Anmeldung: 27.01.2021
(73) Patentinhaber: FISHER DYNAMICS GERMANY GMBH, 42287 Wuppertal (DE)
(72) Erfinder: BECKER, Hans, Burckhard, 42655 Solingen (DE)
(74) Vertreter: Patentanwälte Bauer Vorberg Kayser
(86) Internationale Anmeldenummer: PCT/EP2019/055976
(87) Internationale Veröffentlichungsnummer: WO 2019/179805

(56) Entgegenhaltungen:
- DE-A1-102012 103 919
- DE-B3-102013 001 805

## Beschreibung

Die Erfindung bezieht sich auf ein Sitzträgergestell eines Kraftfahrzeugsitzes, das Sitzträgergestell hat einen Sitzrahmen, eine vom Sitzrahmen getragene Sitzschale und eine zwischen Sitzschale und Sitzrahmen angeordnete Verstellvorrichtung, mit der die Neigung der Sitzschale gegenüber dem Setzträgergestel verstellt werden kann. Es wird eine Vorderkante der Sitzschale in z-Richtung, also nach oben und nach unten bewegt. Diese Verstellung kann motorisch oder manuell betätigt sein.

Aus der DE 10 2012 103 919 A1 ist ein Sitzträgergestell eines Kraftfahrzeugsitzes bekannt, es besteht aus folgenden Bauteilen: Ein Sitzrahmen ist zusammengesetzt aus einem linken und einem rechten Seitenteil, einem Querrohr, das die beiden Seitenteile vorn miteinander verbindet, und einer Traverse, die die beiden Seitenteile hinten miteinander verbindet. Eine Sitzschale ist von dem Sitzrahmen getragen, sie hat hinten zwei Gelenkbereiche, jeweils einer von ihnen ist an einem Seitenteil eingelenkt. Die Sitzschale ist aus zwei miteinander verbundenen und im Abstand voneinander angeordneten Blechteilen, nämlich einer Oberschale und einer Unterschale, zusammengesetzt und weist zudem einen Tragbereich in Form eines Tragrohrs auf, das parallel zum Querrohr verläuft. Die Oberschale und die Unterschale begrenzen gemeinsam einen parallel zum Querrohr verlaufenden Kanal. In einem von diesem Kanal begrenzten Kanalraum ist das Tragrohr untergebracht. Es ragt an seinen beiden Enden aus dem seitlich offenen Kanal heraus. Jedes herausragende Ende ist jeweils mit einem Tragarm verbunden. Eine Verstellvorrichtung ist einerseits mit einem vorderen Bereich eines Seitenteils und andererseits mit dem benachbarten Tragarm verbunden. Über sie wird der Abstand der Sitzschale relativ zum Querrohr eingestellt. Die Sitzschale ist an vier Punkten abgestützt, nämlich über die beiden vorn befindlichen Tragarme und hinten über die beiden Gelenkbereiche.

Aus der DE 20 2017 105 365 U1 ist ein Sitzträgergestell eines Kraftfahrzeugsitzes bekannt, das einen Sitzrahmen mit einem drehbar gelagerten Querrohr hat. Die Drehbewegung dieses Querrohrs wird durch einen Elektromotor bewirkt.

Mit dem Querrohr sind zwei Tragarme verbunden, die an ihren freien Enden an vorderen Bereichen einer Sitzschale angelenkt sind. Auch hier ist der Sitz über eine 4-Punkt Abstützung getragen.

Weiterhin wird auf US 2010/0264717 A1 verwiesen. Die Sitzschale ist über ein vorderes Querelement abgestützt.

Mit der Erfindung soll eine Vereinfachung des Aufbaus eines Sitzträgergestells erreicht werden. Es sollen Bauraum und Gewicht eingespart werden.

Hiervon ausgehend ist es Aufgabe der Erfindung, das Sitzträgergestell nach der o.g. DE 10 2012 103 919 A1 zu verbessern und dahingehend weiterzubilden, dass das Gewicht der Sitzschale verringert ist, Bauraum gespart wird und die Mechanik vereinfacht ist.

Diese Aufgabe wird gelöst durch ein Sitzträgergestell eines Kraftfahrzeugsitzes
a) mit einem Sitzrahmen bestehend aus einem linken und einem rechten Seitenteil, einem Querrohr, das die beiden Seitenteile vorn miteinander verbindet und einer Traverse, die die beiden Seitenteile hinten miteinander verbindet,
b) mit einer Sitzschale, die von dem Sitzrahmen getragen ist, mit dem Sitzrahmen in zwei hinteren Gelenkbereichen verbunden ist, und aus zwei fest miteinander verbundenen und im Abstand voneinander angeordneten Blechteilen, nämlich einer Oberschale und einer Unterschale, zusammengesetzt ist, wobei die Oberschale und die Unterschale gemeinsam einen parallel zum Querrohr verlaufenden Kanal bilden, der einen Kanalraum begrenzt, und
c) mit einer Verstellvorrichtung, die einerseits an einem vorderen Bereich eines der Seitenteile und andererseits gelenkig mit dem diesem Seitenteil benachbarten Endbereich des Kanals verbunden ist und den Abstand der Sitzschale relativ zum Querrohr einzustellen gestattet.

Bei diesem Sitzträgergestell ist die Sitzschale lediglich an drei Punkten getragen und abgestützt, nämlich an den beiden hinteren Gelenkbereichen und vorn nur auf einer Seite, dort wo sich die Verstellvorrichtung befindet. Vorn ist die andere Seite nicht abgestützt. Dort befindet sich kein Tragarm. Die Sitzschale ist aus Oberschale und Unterschale so zusammengesetzt, dass sie torsionssteif ist. Sie ist so torsionssteif, dass auf einen vierten Abstützpunkt verzichtet werden kann.

Die Torsionssteifigkeit wird im Wesentlichen durch den Kanal erreicht. Sie ist so bemessen, dass sie der Torsionsfestigkeit des Tragrohrs der DE 10 2012 103 919 A1 entspricht. Die Aufgabe des Tragrohrs wird zusätzlich durch die besondere Auslegung von Oberschale und Unterschale, also deren Form und Verbindung, übernommen.

Die Erfindung lässt sich auch wie folgt beschreiben: Sitzträgergestell eines Kraftfahrzeugsitzes
- mit einem Sitzrahmen bestehend aus einem linken und einem rechten Seitenteil, einem Querrohr, das die beiden Seitenteile vorn miteinander verbindet und einer Traverse, die die beiden Seitenteile hinten miteinander verbindet,
- mit einer Sitzschale, die von dem Sitzrahmen getragen ist, mit dem Sitzrahmen in je einem hinteren Gelenkbereich verbunden ist, aus zwei miteinander verbundenen und im Abstand voneinander angeordneten Blechteilen, nämlich einer Oberschale und einer Unterschale, zusammengesetzt ist und einen Tragbereich aufweist, der parallel zum Querrohr verläuft, wobei die Oberschale und die Unterschale starr miteinander verbunden sind und gemeinsam einen parallel zum Querrohr verlaufenden Kanal bilden, der einen Kanalraum begrenzt und den Tragbereich ausbildet, und
- mit einer Verstellvorrichtung, die einerseits mit einem vorderen Bereich des Seitenteils und andererseits mit einem diesem Seitenteil benachbarten Ende eines Kanals der Sitzschale verbunden ist und den Abstand der Sitzschale relativ zum Querrohr einzustellen gestattet.

In einer weiteren Alternative lässt sich die Erfindung wie folgt beschreiben: Sitzträgergestell eines Kraftfahrzeugsitzes
- mit einem Sitzrahmen, der ein linkes und ein rechtes Seitenteil und ein Querrohr, das die beiden Seitenteile vorn miteinander verbindet, aufweist,
- mit einer Sitzschale, die von dem Sitzrahmen getragen ist, die aus zwei fest miteinander verbundenen und im Abstand voneinander angeordneten Blechteilen, nämlich eine Oberschale und eine Unterschale, zusammengesetzt ist, wobei die Oberschale und die Unterschale gemeinsam einen parallel zum Querrohr verlaufenden Kanal bilden, der einen Kanalraum begrenzt, und
- mit einer Verstellvorrichtung, die einerseits an einem vorderen Bereich des Sitzrahmens und andererseits gelenkig mit der darüber befindlichen Sitzschale, vorzugsweise der Unterschale der Sitzschale, und insbesondere einem Ende des Kanals, verbunden ist und den Abstand der Sitzschale relativ zum Querrohr einzustellen gestattet.

Die Verbindung der Sitzschale mit dem Sitzrahmen in den hinteren zwei Gelenkbereichen kann auch durch einen durchgehenden hinteren Gelenkbereich oder eine Vielzahl von hinteren Gelenkbereich realisiert sein. Auch eine andere hintere Abstützung der Sitzschale ist möglich. Die Erfindung bezieht sich nicht auf die Abstützung im hinteren Bereich der Sitzschale, sondern nur auf die Abstützung im vorderen Bereich. Im Allgemeinen ist die Sitzschale hinten in Nähe jedes Seitenteils gelenkig abgestützt.

Im Unterschied zum Stand der Technik greift die Verstellvorrichtung nicht an einem Tragrohr an, sondern unmittelbar am Kanal, der die Funktion des Tragrohrs übernimmt. Da die Sitzschale vorn nur an einer Stelle abgestützt ist, wird vorn Platz geschaffen, wie er im Stand der Technik nicht bekannt ist. Dieser Platz kann als Stauraum verwendet werden. Vorzugsweise ist die Sitzschale vorn nur Fahrzeug außenseitig abgestützt.

Vorzugsweise ist die Oberschale flächenmäßig mindestens doppelt so groß wie die Unterschale. Vorzugsweise befindet sich die Verstellvorrichtung vor dem Querrohr. Vorzugsweise ist die Oberschale mit Mitteln zur Aufnahme eines Polsterkörpers ausgerüstet.

Vorzugsweise ist die Sitzschale in ihrem vorderen Bereich ausschließlich von der Verstellvorrichtung getragen ist. Dadurch wird die erfindungsgemäße Dreipunktabstützung der Sitzschale erreicht.

Vorzugsweise ist die Sitzschale in ihrem vorderen Bereich nur auf einer Seite von dem Sitzrahmen getragen ist, auf der anderen Seite aber nicht. Es besteht die Möglichkeit, dass sich die Verstellvorrichtung mittig zwischen den zwei Seitenteilen befindet.

Die Verstellvorrichtung kann mit der Unterschale gelenkig verbunden sein. Sie kann am Sitzrahmen festgelegt sein oder in einer Alternative mit den Sitzrahmen in einem Gelenk verbunden sein.

In einer bevorzugten Ausbildung ist an dem über oder neben der Verstellvorrichtung befindlichen Ende des Kanals ein Halteteil angeschweißt, an dem die Verstellvorrichtung angelenkt ist. Es ist möglich, eine Spindel der Verstellvorrichtung an ihrem freien Ende mit einer Öse zu versehen und diese Öse direkt gelenkig mit dem Kanal zu verbinden, ohne dazwischen ein zusätzliches Teil anzuordnen.

Vorzugsweise ist der Kanal seitlich geschlossen. Vorzugsweise sind Oberschale und Unterschale in den Randbereichen des Kanals miteinander verbunden, insbesondere verschweißt. Diese Verbindungen befinden sich in unmittelbarer Nähe des Kanalraums. Vorzugsweise ist der Kanalraum allseitig geschlossen. Dies kann insbesondere durch eine geschlossen um den Kanalraum umlaufende Naht zwischen Oberschale und Unterschale erreicht werden.

Vorzugsweise ist der Kanalraum Teil eines U-förmigen Hohlraums, der nach hinten weisende U-Schenkel hat, und Verlauf die U-Schenkel parallel zu den Seitenteilen. Durch die U-Schenkel wird die Torsionssteifigkeit bei Verdrehung um die y-Achse erhöht. Zudem wird die Sitzschale biegesteifer.

Vorzugsweise weist im Kanalraum die Oberschale in z-Richtung und in x-Richtung jeweils eine Entfernung von mindestens 10 mm, vorzugsweise mindestens 20 mm von der Unterschale auf. Durch einen ausreichenden Querschnitt, gesehen in der x-z Ebene, wird die Torsionsfestigkeit des Kanals erreicht.

Vorzugsweise sind die Oberschale und oder die Unterschale klappsymmetrisch zu einer x-z Ebene, die durch die Längsmitte des Sitzträgergestells verläuft. Sie können so für einen linken als auch einen rechten Frontsitz verwendet werden.

Die Erfindung ersetzt somit ein quer verlaufendes Tragrohr durch eine Blechkonstruktion, nämlich insbesondere den Kanal, den Oberschale und Unterschale gemeinsam begrenzen und ausbilden. Diese Konstruktion in flachem Blechmaterial ist kostengünstiger und leichter als die Verwendung eines Rohres nach dem Stand der Technik. Trotz geringerer Wandstärken kann aufgrund der frei wählbaren, möglichst groß gewählten Abstände zwischen Oberschale und Unterschale eine höhere Festigkeit erreicht werden, als sie ein Rohr bietet.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im Folgenden näher erläutert wird. Die Figuren dieser Zeichnung zeigen folgendes:

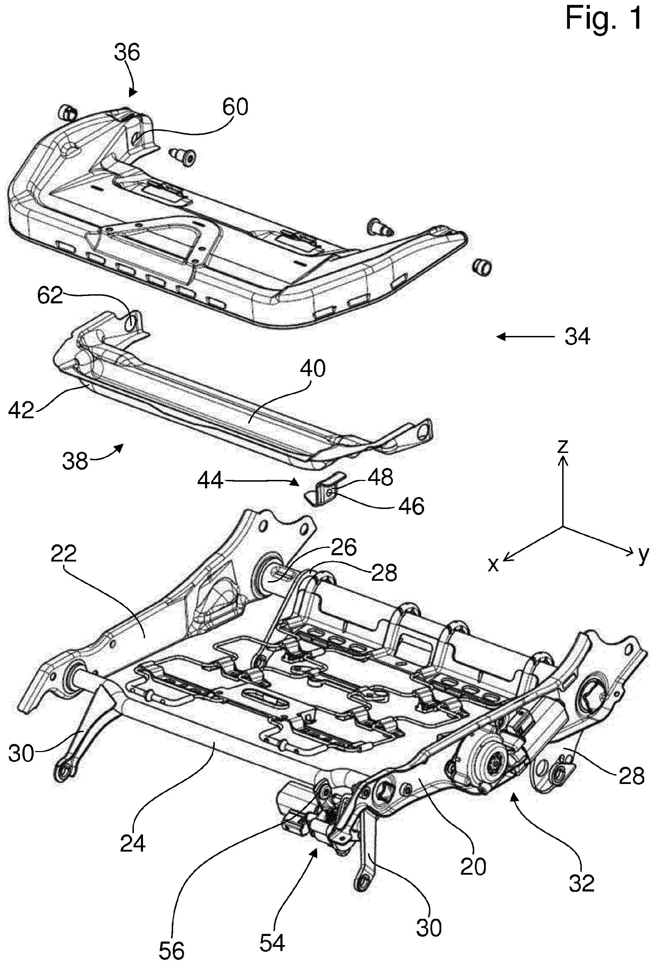

- Figur 1: ein perspektivisches Montagebild eines Sitzträgergestells,
- Figur 2: eine perspektivische Darstellung einer Sitzschale mit Ansicht von schräg vorn, unten, und mit einer Verstellvorrichtung,

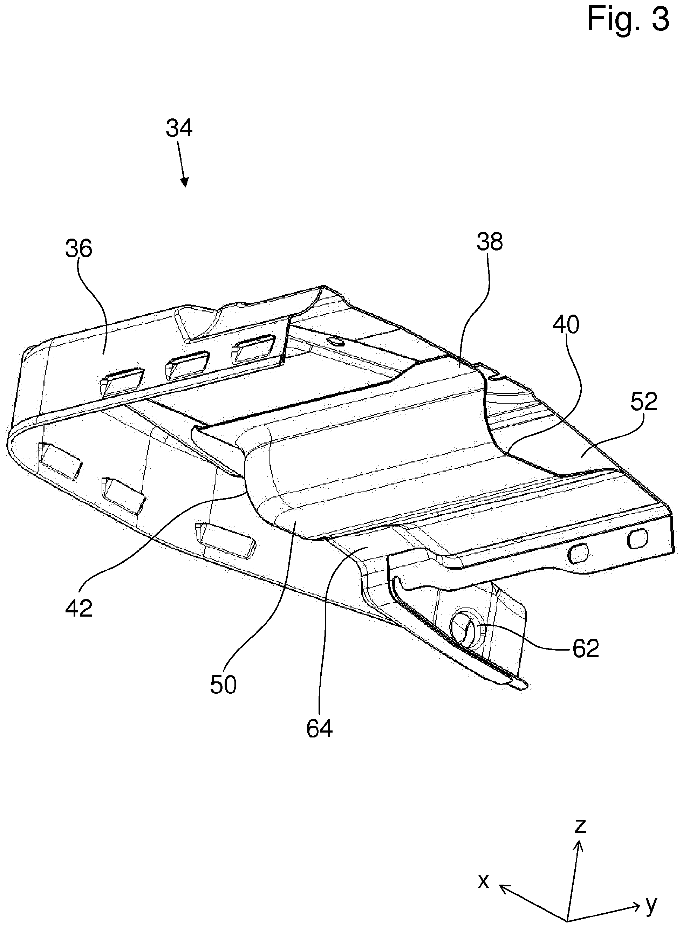

- Figur 3: eine perspektivische Schnittansicht, Schnittebene ist die x-z-Ebene und mit Blickrichtung in negativer y-Richtung durch die Anordnung gemäß Figur 2, und
- Figur 4: eine perspektivische Schnittansicht wie Figur 3, jedoch nun in positiver y-Richtung als Blickrichtung.

Für die Beschreibung wird ein rechtshändiges, orthogonales x-y-z Koordinatensystem verwendet. Die positive x-Achse verläuft in Längsrichtung von Seitenteilen, sie stimmt damit nahezu mit der normalen Fahrtrichtung eines Kraftfahrzeugs überein. Die positive y-Achse befindet sich in der Ebene des Sitzträgers. Die z-Achse geht im Wesentlichen rechtwinklig nach oben, dies entspricht auch der Bezeichnung "oben". Das Wort "vorn" wird für die positive x-Richtung verwendet. Das Wort links wird für die positive y-Richtung verwendet.

Ein Sitzrahmen wird im Wesentlichen durch ein linkes Seitenteil 20, ein rechtes Seitenteil 22, ein Querrohr 24, das die beiden Seitenteile 20, 22 vorn miteinander verbindet, und eine Traverse 26 gebildet, die die beiden Seitenteile 20, 22 hinten miteinander verbindet. Ein derartiger Sitzrahmen ist Stand der Technik. Im Stand der Technik wird der Sitzrahmen durch ein linkes und ein rechtes Paar Führungsschienen getragen, die hier nicht dargestellt sind, sie sind bekannt. Sie sind hinten über einen linken und einen rechten hinteren Stellarm 28 und vorn über eine linke und eine rechte Schwenkstütze 30 mit dem Sitzrahmen verbunden. Die Neigung der hinteren Stellarme 28 wird durch eine Einstellvorrichtung 32 verändert, dies ist Stand der Technik.

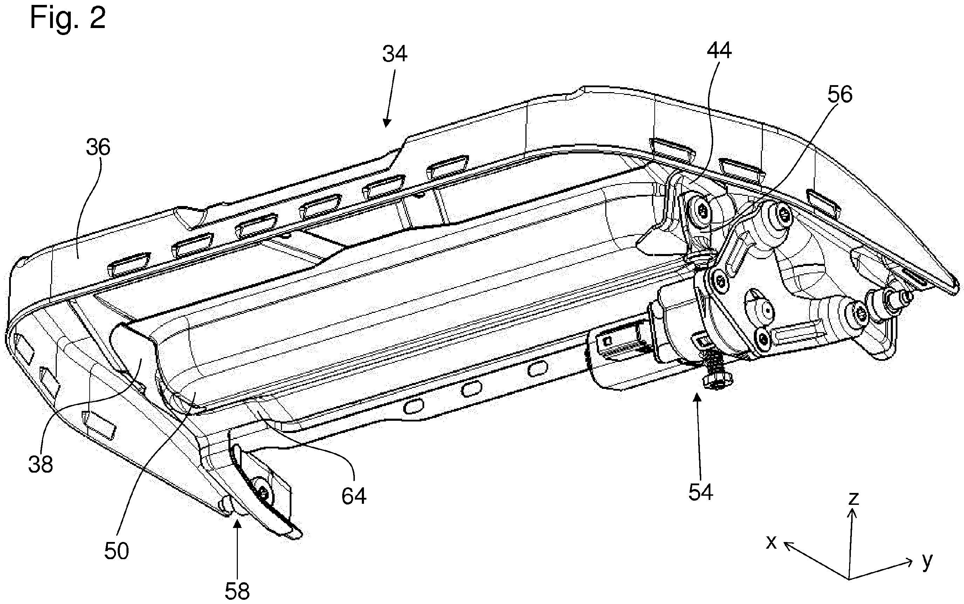

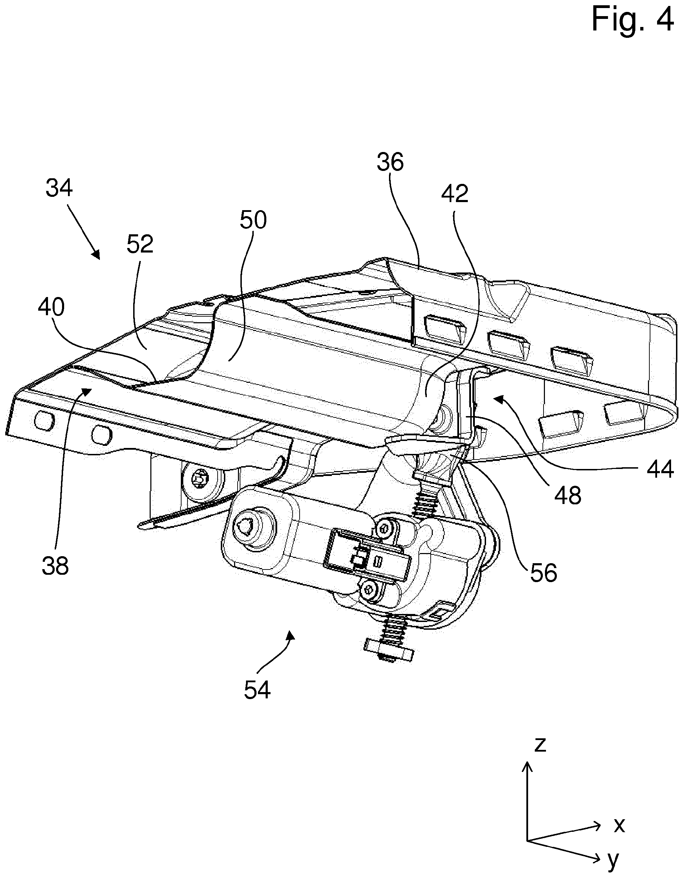

Eine Sitzschale 34 besteht im Wesentlichen aus einer Oberschale 36 und einer Unterschale 38. Beide Schalen 36, 38 sind Blechformteile. Sie können eine unterschiedliche Materialdicke aufweisen, beispielsweise um 50 % abweichend voneinander. In die Unterschale 38 ist eine Rinne 40 eingeprägt, die sich über mehr als 60 %, vorzugsweise mehr als 70 % des lichten Abstandes zwischen den beiden Seitenteilen 20, 22 erstreckt. Sie verläuft in y-Richtung. Sie ist in ihren Enden 42 gerundet bzw. ballig ausgebildet. An einem Ende 42 und nur an einem Ende 42, im Ausführungsbeispiel am linken Ende 42, ist ein Halteteil 44 angeschweißt. Es hat eine Bohrung 46 mit einer in y-Richtung verlaufenden Achse. Die Bohrung 46 befindet sich in einem Mittelbereich 48 des Halteteils 44, der in der x-z Ebene verläuft. Von diesen Mittelbereich 48 stehen oben ein oberer und unten ein unterer Arm rechtwinklig, aber in Gegenrichtung zueinander weg. Der untere Arm ist an der tiefsten Stelle der Rinne 40 angeschweißt, siehe Figur 2 und 4. Der obere Arm ist in kleinem Abstand vom Ende 42 und damit von der Rinne 40 unten an der Unterschale 38 angeschweißt.

Die eigentliche Funktion einer Sitzschale 34 nach dem Stand der Technik übernimmt die Oberschale 36. Sie ist dementsprechend mit Mitteln zur Aufnahme eines hier nicht dargestellten Sitzkissens, einer Polsterung usw. ausgelegt. Sie ist mit der Unterschale 38 fest verbunden. Vorzugsweise verläuft eine verbindende Naht geschlossen um die Rinne 40 herum. Die Rinne 40 bildet mit dem darüber befindlichen Teilbereich der Oberschale 36 einen Kanal 50. Er hat einen allseitig geschlossenen Kanalraum 52. Dessen Querschnitt, gesehen in y-Richtung, wird ausreichend groß gewählt damit die nötige Torsionssteifigkeit für die 3-Punkt Abstützung erreicht wird. In x-Richtung und in z-Richtung werden jeweils Querschnittsabmessungen erreicht, die vorzugsweise nicht unter 20 mm liegen.

Am linken Seitenteil 20 ist vor dem Querrohr 24 eine Verstellvorrichtung 54 befestigt. Sie hat einen Elektromotor, sie ist nach dem Stand der Technik ausgeführt. Sie hat einen Stützarm 56, dessen Höhe einstellbar ist. Er ist mit der Bohrung 46 in einem Gelenk verbunden. Durch den Stützarm 56 und die beschriebene Verbindung wird die Abstützung der Sitzschale 34 in ihrem vorderen Bereich, also oberhalb des Querrohrs 24, erreicht. Dies ist die einzige Abstützung vorn. Die rechte Seite der Sitzschale 34 ist nicht in ähnlicher Weise wie im Stand der Technik abgestützt, sondern hält ihre Position auch bei Belastung aufgrund der Festigkeit des Kanals 50.

In einem linken und einem rechten hinteren Gelenkbereich ist die Sitzschale 34 am linken Seitenteil 20 bzw. am rechten Seitenteil 22 angelenkt. Dies erfolgt nach dem Stand der Technik. Zur Ausbildung hinterer Gelenkbereiche hat die Oberschale 36 einen linken und einen rechten Durchlass 60 und hat die Unterschale 38 entsprechende Löcher 62. Auf jeder Sitzseite befindet sich jeweils ein Durchlass 60 in Nähe eines Lochs 62, jeweils ein Durchlass 60 und ein Loch 62 fluchten und gehören zu einem Gelenkbereich 58. Vorzugsweise sind Oberschale 36 und Unterschale 38 jeweils im Bereich eines Durchlasses 60 und eines Loches 62 miteinander verbunden. Sie können aber auch im Abstand voneinander angeordnet sein.

Die Unterschale 38 ist in z Richtung gesehen etwa U-förmig. Die Basis bildet die Rinne 40 aus. In den Schenkeln befinden sich jeweils die Löcher 62. Dort verläuft das Material der Unterschale 38 im Wesentlichen in der x-z-Ebene und trägt zur Versteifung der Sitzschale 34 bei. Weiterhin ist in den Schenkeln eine Ausformung 64 vorgesehen, die dieselbe Funktion wie die größer ausgebildete Rinne 40 hat aber rechtwinklig zu ihr verläuft. Auch hierdurch wird eine Aussteifung erreicht

Das Sitzträgergestell eines Kraftfahrzeugsitzes hat einen Sitzrahmen, der ein linkes und ein rechtes Seitenteil 20, 22, und ein Querrohr 24 aufweist, das die beiden Seitenteile 20, 22 vorn miteinander verbindet. Er hat zudem eine Sitzschale 34, die von dem Sitzrahmen getragen ist und aus zwei fest miteinander verbundenen und im Abstand voneinander angeordneten Blechteilen, nämlich eine Oberschale 36 und eine Unterschale 38 zusammengesetzt ist. Die Oberschale 36 und die Unterschale 38 bilden gemeinsam einen parallel zum Querrohr 24 verlaufenden Kanal 50 aus. Er hat eine Verstellvorrichtung 54, die einerseits nur an einem vorderen Bereich eines der Seitenteile und andererseits gelenkig mit dem diesem Seitenteil benachbarten Endbereich des Kanals 50 verbunden ist und den Abstand der Sitzschale 34 relativ zum Querrohr 24 einzustellen gestattet.

Begriffe wie im Wesentlichen, vorzugsweise und dergleichen sowie möglicherweise als ungenau zu verstehende Angaben sind so zu verstehen, dass eine Abweichung um plusminus 5 %, vorzugsweise plusminus 2 % und insbesondere plus minus ein Prozent vom Normalwert möglich ist. Die Anmelderin behält sich vor, beliebige Merkmale und auch Untermerkmale aus den Ansprüchen und/oder beliebige Merkmale und auch Teilmerkmale aus einem Satz der Beschreibung in beliebiger Art mit anderen Merkmalen, Untermerkmalen oder Teilmerkmalen zu kombinieren, dies auch außerhalb der Merkmale unabhängiger Ansprüche.

In den unterschiedlichen Figuren sind hinsichtlich ihrer Funktion gleichwertige Teile stets mit denselben Bezugszeichen versehen, sodass diese in der Regel auch nur einmal beschrieben werden.

### Bezugszeichenliste

- 20: linkes Seitenteil
- 22: rechtes Seitenteil
- 24: Querrohr
- 26: Traverse
- 28: Stellarm
- 30: Schwenkstütze
- 32: Einstellvorrichtung
- 34: Sitzschale
- 36: Oberschale
- 38: Unterschale
- 40: Rinne
- 42: Ende
- 44: Halteteil
- 46: Bohrung
- 48: Mittelbereich
- 50: Kanal
- 52: Kanalraum
- 54: Verstellvorrichtung
- 56: Stützarm
- 60: Durchlass
- 62: Loch
- 64: Ausformung

## Patentansprüche

1. Sitzträgergestell eines Kraftfahrzeugsitzes
- mit einem Sitzrahmen, der ein linkes und ein rechtes Seitenteil (20, 22), und ein Querrohr (24) aufweist, das die beiden Seitenteile (20, 22) vorn miteinander verbindet,
- mit einer Sitzschale (34), die von dem Sitzrahmen getragen ist, aus zwei fest miteinander verbundenen und im Abstand voneinander angeordneten Blechteilen, nämlich eine Oberschale (36) und eine Unterschale (38) zusammengesetzt ist, wobei die Oberschale (36) und die Unterschale (38) gemeinsam einen parallel zum Querrohr (24) verlaufenden Kanal (50) bilden, der einen Kanalraum (52) begrenzt, und
- mit einer Verstellvorrichtung (54), die einerseits an einem vorderen Bereich eines der Seitenteile und andererseits gelenkig mit dem diesem Seitenteil benachbarten Endbereich des Kanals (50) verbunden ist und den Abstand der Sitzschale (34) relativ zum Querrohr (24) einzustellen gestattet.

2. Sitzträgergestell nach Anspruch 1, **dadurch gekennzeichnet, dass** die Sitzschale (34) in ihrem vorderen Bereich ausschließlich von der Verstellvorrichtung (54) getragen ist.

3. Sitzträgergestell nach einem der vorangegangenen Ansprüche, **dadurch gekennzeichnet, dass** die Sitzschale (34) in ihrem vorderen Bereich nur auf einer Seite von dem Sitzrahmen getragen ist, auf der anderen Seite aber nicht.

4. Sitzträgergestell nach einem der vorangegangenen Ansprüche, **dadurch gekennzeichnet, dass** die Verstellvorrichtung (54) mit der Unterschale (38), insbesondere mit einem Ende (42) einer Rinne (40) der Unterschale (38) gelenkig verbunden ist.

5. Sitzträgergestell nach einem der vorangegangenen Ansprüche, **dadurch gekennzeichnet, dass** an einem der Verstellvorrichtung (54) benachbarten Ende (42) des Kanals (50) ein Halteteil (44) angeschweißt ist, an dem die Verstellvorrichtung (54) angelenkt ist.

6. Sitzträgergestell nach einem der vorangegangenen Ansprüche, **dadurch gekennzeichnet, dass** der Kanal (50) seitlich geschlossen ist, insbesondere allseitig geschlossen ist.

7. Sitzträgergestell nach einem der vorangegangenen Ansprüche, **dadurch gekennzeichnet, dass** der Kanalraum (52) Teil eines U-förmigen Hohlraums ist, der nach hinten weisende U-Schenkel hat, und dass die U-Schenkel parallel zu den Seitenteilen verlaufen.

8. Sitzträgergestell nach einem der vorangegangenen Ansprüche, **dadurch gekennzeichnet, dass** im Kanalraum (52) die Oberschale (36) in z-Richtung und in x-Richtung jeweils eine Entfernung von mindestens 10 mm, vorzugsweise mindestens 20 mm von der Unterschale (38) aufweist.

9. Sitzträgergestell nach einem der vorangegangenen Ansprüche, **dadurch gekennzeichnet, dass** zur Ausbildung hinterer Gelenkbereiche die Oberschale (36) zwei Durchlässe und die Unterschale (38) zwei Löcher (62) aufweist, dass auf jeder Sitzseite jeweils ein Durchlass (60) sich in Nähe eines Lochs (62) befindet, und dass jeweils ein Durchlass (60) und ein Loch (62) zu einem Gelenkbereich gehören, und dass vorzugsweise Oberschale (36) und Unterschale (38) jeweils im Bereich eines Durchlasses (60) und eines Loches (62) beanstandet oder miteinander verbunden sind.

10. Sitzträgergestell nach einem der vorangegangenen Ansprüche, **dadurch gekennzeichnet, dass** das Querrohr (24) in jedem Seitenteil (20, 22) drehbar gelagert ist, dass das Querrohr (24) mit einer linken Schwenkstütze (30) und mit einer rechten Schwenkstütze (30) fest verbunden ist.

11. Sitzträgergestell nach einem der vorangegangenen Ansprüche, **dadurch gekennzeichnet, dass** die Oberschale (36) und/oder die Unterschale (38) klappsymmetrisch zu einer x-z Ebene sind, die durch die Längsmitte des Sitzträgergestells verläuft.

12. Sitzträgergestell nach einem der vorangegangenen Ansprüche, **dadurch gekennzeichnet, dass** eine Traverse (26) die beiden Seitenteile (20, 22) hinten miteinander verbindet und vorzugsweise mit den hinteren Enden (42) jedes Seitenteils (20, 22) in einem Drehgelenk verbunden ist.

13. Sitzträgergestell nach dem vorangegangenen Anspruch, **dadurch gekennzeichnet, dass** die Traverse (26) in Nähe eines ihrer Endbereiche mit einem linken Stellarm (28) und in Nähe ihres anderen Endbereichs mit einem rechten Stellarm (28) verbunden ist.

14. Sitzträgergestell nach einem der vorangegangenen Ansprüche, **dadurch gekennzeichnet, dass** die Unterschale (38) eine Rinne (40) aufweist, die sich über mindestens 60 %, vorzugsweise mindestens 70 % des lichten Abstandes zwischen den beiden Seitenteilen (20, 22) erstreckt.

## Claims

1. A seat support frame of a motor vehicle seat,
- with a seat frame having a left and a right side part (20, 22) and a cross tube (24) connecting the two side parts (20, 22) to one another at the front,
- with a seat shell (34), which is supported by the seat frame, is composed of two sheet metal parts firmly connected to one another and arranged at a distance from one another, namely an upper shell (36) and a lower shell (38), wherein the upper shell (36) and the lower shell (38) together form a channel (50), which extends parallel to the cross tube (24) and delimits a channel space (52), and
- with an adjusting device (54), which, on the one hand, is connected to a front region of one of the side parts and, on the other hand, is connected in an articulated manner to the end region of the channel (50) adjacent to this side part, and which allows an adjustment of the distance of the seat shell (34) relative to the cross tube (24).

2. The seat support frame according to claim 1, **characterized in that** the seat shell (34) is supported in its front region by the adjusting device (54) only.

3. The seat support frame according to any one of the preceding claims, **characterized in that** the seat shell (34), in its front region, is supported by the seat frame only on one side, but not on the other side.

4. The seat support frame according to any one of the preceding claims, **characterized in that** the adjusting device (54) is connected in an articulated manner to the lower shell (38), particularly to an end (42) of a trough (40) of the lower shell (38).

5. The seat support frame according to any one of the preceding claims, **characterized in that** a retaining part (44), to which the adjusting device (54) is hinged, is welded to one end (42) of the channel (50) adjacent to the adjusting device (54).

6. The seat support frame according to any one of the preceding claims, **characterized in that** the channel (50) is closed at the sides, particularly at all sides.

7. The seat support frame according to any one of the preceding claims, **characterized in that** the channel space (52) is part of a U-shaped cavity, which has U-legs that point towards the rear, and that the U-legs extend parallel to the side parts.

8. The seat support frame according to any one of the preceding claims, **characterized in that** in the channel space (52), the upper shell (36) has a distance in the z-direction and in the x-direction in each case of at least 10 mm, preferably of at least 20 mm, from the lower shell (38).

9. The seat support frame according to any one of the preceding claims, **characterized in that**, for the formation of rear joint regions, the upper shell (36) comprises two passages and the lower shell (38) comprises two holes (62), that one passage (60) is respectively located on each side of the seat in the vicinity of a hole (62), and that one passage (60) and one hole (62) in each case belong to a joint region, and that the upper shell (36) and the lower shell (38), in each case in the region of a passage (60) and of a hole (62), are preferably spaced apart or connected to one another.

10. The seat support frame according to any one of the preceding claims, **characterized in that** the cross tube (24) is rotatably mounted in each side part (20, 22), that the cross tube (24) is firmly connected to a left pivoting support (30) and to a right pivoting support (30).

11. The seat support frame according to any one of the preceding claims, **characterized in that** the upper shell (36) and/or the lower shell (38) are configured mirror-symmetrically with respect to an x-z plane extending through the longitudinal center of the seat support frame.

12. The seat support frame according to any one of the preceding claims, **characterized in that** a cross member (26) connects the two side parts (20, 22) with one another at the rear and is preferably connected to the rear ends (42) of each side part (20, 22) in a rotating joint.

13. The seat support frame according to the preceding claim, **characterized in that** the cross member (26) is connected, in the vicinity of one of its end regions, to a left adjusting arm (28), and, in the vicinity of its other end region, with a right adjusting arm (28).

14. The seat support frame according to any one of the preceding claims, **characterized in that** the lower shell (38) has a trough (40) which extends over at least 60%, preferably at least 70 %, of the clear distance between the two side parts (20, 22).

## Revendications

1. Châssis de support de siège d'un siège de véhicule automobile
- avec un cadre de siège qui présente une partie latérale gauche et une partie latérale droite (20, 22) ainsi qu'un tube transversal (24) qui relie les deux parties latérales (20, 22) l'une à l'autre à l'avant,
- avec une coque de siège (34) qui est supportée par ledit cadre de siège, est composée de deux parties en tôle qui sont solidaires l'une de l'autre et disposées à distance l'une de l'autre, à savoir d'une coque supérieure (36) et d'une coque inférieure (38), dans lequel la coque supérieure (36) et la coque inférieure (38) forment ensemble un canal (50) qui s'étend parallèlement au tube transversal (24) et qui délimite un espace de canal (52), et
- avec un dispositif de réglage (54) qui est relié d'une part à une zone avant de l'une des parties latérales et est relié d'autre part de manière articulée à la zone d'extrémité du canal (50) qui est adjacente à cette partie latérale, et qui permet de régler la distance de la coque de siège (34) par rapport au tube transversal (24).

2. Châssis de support de siège selon la revendication 1, **caractérisé par le fait que** la coque de siège (34) est supportée dans sa zone avant exclusivement par le dispositif de réglage (54).

3. Châssis de support de siège selon l'une quelconque des revendications précédentes, **caractérisé par le fait que** la coque de siège (34) est supportée dans sa zone avant par le cadre de siège seulement d'un côté, mais pas de l'autre côté.

4. Châssis de support de siège selon l'une quelconque des revendications précédentes, **caractérisé par le fait que** le dispositif de réglage (54) est relié de manière articulée à la coque inférieure (38), en particulier à une extrémité (42) d'une rigole (40) de la coque inférieure (38).

5. Châssis de support de siège selon l'une quelconque des revendications précédentes, **caractérisé par le fait qu'**une partie de maintien (44) sur laquelle est articulée le dispositif de réglage (54) est soudée à une extrémité (42) du canal (50), qui est adjacente au dispositif de réglage (54).

6. Châssis de support de siège selon l'une quelconque des revendications précédentes, **caractérisé par le fait que** le canal (50) est fermé latéralement, en particulier est fermé de tous côtés.

7. Châssis de support de siège selon l'une quelconque des revendications précédentes, **caractérisé par le fait que** l'espace de canal (52) fait partie d'une cavité en forme de U qui présente des branches en U tournées vers l'arrière, et que les branches en U s'étendent parallèlement aux parties latérales.

8. Châssis de support de siège selon l'une quelconque des revendications précédentes, **caractérisé par le fait que**, dans l'espace de canal (52), la coque supérieure (36) présente dans la direction z et dans la direction x respectivement une distance d'au moins 10 mm, de préférence d'au moins 20 mm de la coque inférieure (38).

9. Châssis de support de siège selon l'une quelconque des revendications précédentes, **caractérisé par le fait que**, pour former des zones d'articulation arrière, la coque supérieure (36) présente deux passages et la coque inférieure (38) comprend deux trous (62), que respectivement un passage (60) est situé à proximité d'un trou (62) de tout côté de siège, et que respectivement un passage (60) et un trou (62) appartiennent à une zone d'articulation, et que de préférence la coque supérieure (36) et la coque inférieure (38) sont espacées l'une de l'autre ou reliées l'une à l'autre respectivement au niveau d'un passage (60) et d'un trou (62).

10. Châssis de support de siège selon l'une quelconque des revendications précédentes, **caractérisé par le fait que** le tube transversal (24) est monté de manière rotative dans chaque partie latérale (20, 22), que le tube transversal (24) est solidaire d'un support pivotant gauche (30) et d'un support pivotant droit (30).

11. Châssis de support de siège selon l'une quelconque des revendications précédentes, **caractérisé par le fait que** la coque supérieure (36) et/ou la coque inférieure (38) sont à symétrie de pliage par rapport à un plan x-z qui passe par le centre longitudinal du châssis de support de siège.

12. Châssis de support de siège selon l'une quelconque des revendications précédentes, **caractérisé par le fait qu'**une traverse (26) relie les deux parties latérales (20, 22) l'une à l'autre à l'arrière et est reliée de préférence aux extrémités arrière (42) de chaque partie latérale (20, 22) dans un joint tournant.

13. Châssis de support de siège selon l'une quelconque des revendications précédentes, **caractérisé par le fait que** la traverse (26) est reliée à proximité de l'une de ses zones d'extrémité à un bras de réglage gauche (28) et à proximité de son autre zone d'extrémité à un bras de réglage droit (28).

14. Châssis de support de siège selon l'une quelconque des revendications précédentes, **caractérisé par le fait que** la coque inférieure (38) présente une rigole (40) qui s'étend sur au moins 60 %, de préférence sur au moins 70 % de la distance libre entre les deux parties latérales (20, 22).
